(19) Europäisches Patentamt
European Patent Office
Office européen des brevets

(11) **EP 2 229 525 B1**

(12) **FASCICULE DE BREVET EUROPEEN**

(45) Date de publication et mention de la délivrance du brevet:
**10.08.2011 Bulletin 2011/32**

(51) Int Cl.:
*F02M 25/07* *(2006.01)*     *F01P 9/06* *(2006.01)*
*F01N 3/00* *(2006.01)*     *B60H 1/00* *(2006.01)*

(21) Numéro de dépôt: **08855770.7**

(86) Numéro de dépôt international:
**PCT/EP2008/065716**

(22) Date de dépôt: **18.11.2008**

(87) Numéro de publication internationale:
**WO 2009/071439 (11.06.2009 Gazette 2009/24)**

(54) **VEHICULE AUTOMOBILE COMPRENANT UN CIRCUIT DE GAZ RECIRCULES ET PROCEDE DE MISE EN OEUVRE**

EINEN KREISLAUF FÜR RÜCKGEFÜHRTES GAS ENTHALTENDES KRAFTFAHRZEUG UND IMPLEMENTIERUNGSVERFAHREN DAFÜR

MOTOR VEHICLE COMPRISING A RECIRCULATED-GAS CIRCUIT, AND METHOD FOR IMPLEMENTING SAME

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité:  **05.12.2007  FR 0708497**

(43) Date de publication de la demande:
**22.09.2010  Bulletin 2010/38**

(73) Titulaire: **Renault S.A.S.**
**92100 Boulogne-Billancourt (FR)**

(72) Inventeurs:
• **ARCHER, PASCAL**
**F-75014 Paris (FR)**
• **ROUAUD, PASCAL**
**F-78000 Versailles (FR)**
• **METAYER, JULIEN**
**F-78150 Le Chesnay (FR)**

(74) Mandataire: **Religieux, Vincent**
**Renault Technocentre**
**Sce 00267 - TCR GRA 2 36**
**1, avenue du Golf**
**78288 Guyancourt Cedex (FR)**

(56) Documents cités:
**EP-A- 1 334 852     EP-A- 1 724 453**
**FR-A- 2 861 811     FR-A- 2 890 700**
**JP-A- 11 200 955**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne le domaine des moteurs de véhicules automobiles fonctionnant au diesel ou à l'essence, comprenant un circuit de gaz d'échappement recirculés.

Les contraintes environnementales relatives aux émissions de gaz d'échappement d'un véhicule à moteur à combustion interne, notamment un moteur de type diesel, sont de plus en plus nombreuses. Les futures normes d'émissions polluantes nécessitent l'utilisation de systèmes de post-traitement coûteux, notamment pour diminuer les émissions d'oxydes d'azote (NOx). Une diminution de la température des gaz d'admission réduit les émissions de NOx et permet donc de s'affranchir de certains systèmes de post-traitement ou du moins de diminuer leur chargement en catalyseur et par conséquent le surcoût dû au post-traitement.

Actuellement, le refroidissement des gaz d'admission, c'est-à-dire un mélange d'air frais + gaz d'échappement recirculés, est souvent assuré par un radiateur en face avant du véhicule et/ou un échangeur dont la source froide est le liquide de refroidissement du moteur thermique.

GB 2 394 537 décrit un procédé de refroidissement des gaz d'échappement circulés avec le liquide de refroidissement issu soit de la sortie du radiateur de refroidissement du moteur thermique, soit en sortie du moteur thermique, soit une combinaison des 2.

US 2003/0089319 et US 6,668,764 décrivent des circuits de refroidissement du groupe motopropulseur, le refroidissement des gaz d'échappement recirculés étant obtenu avec le liquide de refroidissement pris en sortie du moteur thermique.

Il est également possible d'utiliser un circuit de refroidissement supplémentaire dédié dans le but d'obtenir des températures plus basses. EP 1 059 432 décrit un système de refroidissement des gaz d'échappement circulés avec un circuit de refroidissement séparé.

EP 1 091 113 décrit un circuit de refroidissement avec un échangeur de refroidissement des gaz d'échappement à 2 niveaux de température. Toutefois, dans ce système, le refroidissement est limité par la valeur de la température du liquide de refroidissement qui est issu du dispositif de refroidissement du moteur.

WO 2005/45224 propose un procédé de sous-refroidissement des gaz d'admission assisté par la boucle de climatisation. Le refroidissement est assuré par un échange thermique direct entre les gaz d'échappement et le fluide frigorigène. Cette solution ne permet pas le stockage de froid.

Le document FR 2 890 700, dont le contenu est incorporé à la présente demande par référence, propose un système de sous-refroidissement des gaz d'admission assisté par la boucle de climatisation. La solution utilise un circuit d'eau secondaire refroidi par la climatisation. Un échangeur gaz / eau du circuit secondaire assure alors le sous-refroidissement des gaz d'admission. Cependant, la production de froid par la boucle de climatisation nécessite de prendre de l'énergie au moteur, par le biais de l'alternateur ou de la courroie de distribution, ce qui occasionne une surconsommation. La solution proposée dans ce document n'est pas accompagnée de stratégies de pilotage distinctes selon le régime du moteur et ne comporte pas de système de stockage de froid.

L'objectif de l'invention présentée ici est de réduire la température des gaz d'admission en utilisant la boucle de climatisation, sans entraîner de surconsommation moteur.

L'invention propose des stratégies de pilotage variant en fonction des conditions de conduite du véhicule ainsi que des circuits hydrauliques associés.

A cet effet, l'invention propose un véhicule automobile comprenant

- un moteur thermique comprenant un circuit de gaz d'échapement recirculés, le dit circuit de gaz recirculés comprenant un échangeur thermique pour les dits gaz d'échappement recirculés comprenant un premier étage haute température et un deuxième étage basse température,
- un premier circuit hydraulique de refroidissement du dit moteur,
- un circuit de climatisation de l'habitacle du véhicule comprenant, dans une première branche, un évaporateur dans lequel circule un fluide frigorigène,
- un deuxième circuit hydraulique de refroidissement des gaz recirculés, comprenant une pompe entraînant le liquide de refroidissement du dit deuxième circuit hydraulique,
  ledit premier étage haute température étant disposé dans le premier circuit hydraulique de refroidissement et le dit deuxième étage basse température étant disposé dans le deuxième circuit hydraulique de refroidissement,
  le dit véhicule comprenant
  un échangeur thermique de stockage permettant un échange thermique entre le liquide de refroidissement du deuxième circuit hydraulique et le fluide frigorigène du circuit de climatisation,
  le deuxième circuit hydraulique comprenant un dispositif de by-pass permettant au liquide de refroidissement du deuxième circuit hydraulique de by-passer l'échangeur thermique de stockage,
  le circuit de climatisation comprenant une deuxième branche, en parallèle de la dite première branche de l'évaporateur, permettant aux fluide frigorigène de circuler dans l'échangeur thermique de stockage.

Les gaz d'échappement recirculés peuvent être pris en amont de la turbine (EGR Haute Pression) ou en aval des systèmes de post-traitement (EGR Basse Pression).

Le dispositif de by-pass du deuxième circuit hydraulique de refroidissement peut comporter une vanne à trois voies.

Le deuxième circuit hydraulique de refroidissement peut comporter un radiateur pour refroidir son liquide de refroidissement.

Le circuit de climatisation peut comporter une vanne à trois voies permettant de faire passer le fluide frigorigène dans la première branche ou dans la deuxième branche.

Le circuit de gaz d'échappement recirculés peut comporter en aval de l'échangeur thermique un séparateur de phases, un réservoir de liquide et un dispositif d'injection capable de réinjecter le dit liquide dans le circuit de gaz recirculés, en sortie de RAS, au niveau du collecteur d'admission ou directement dans la chambre de combustion. Lorsque le liquide est injecté dans le gaz, il s'évapore entraînant ainsi une diminution de la température du gaz.

Le circuit de climatisation peut être un circuit réversible en pompe à chaleur et comporter une vanne permettant d'inverser le débit du fluide , une vanne supplémentaire reliant la sortie du moteur thermique à la sortie du radiateur du deuxième circuit hydraulique.

Le dispositif selon l'invention est mis en oeuvre en régime de fonctionnement continu du moteur thermique du véhicule en pilotant la cylindrée ou la vitesse de rotation du compresseur du circuit de climatisation de façon à optimiser le rapport entre le gain moteur par remplissage et la consommation.

On sait que lorsque le compresseur d'un système de climatisation d'un véhicule automobile fonctionne, il prélève de la puissance à l'arbre moteur, via la courroie accessoire si le compresseur est mécanique, via l'alternateur s'il est électrique. Par contre, un refroidissement des gaz d'admission entraîne une augmentation de la puissance délivrée par le moteur. En effet, la masse volumique des gaz d'admission augmente lorsque leur température diminue. Ainsi, à volume égal des cylindres, la masse d'air admise est plus grande, ce qui augmente la puissance: ce phénomène est qualifié de gain moteur par remplissage.

La présente invention met en oeuvre le fluide de climatisation du véhicule pour refroidir le liquide de refroidissement du circuit hydraulique mentionné ci-dessus, qui à son tour refroidit les gaz d'échappement recirculés, augmentant ainsi le gain moteur par remplissage. Il existe, sur un grand nombre de points moteur, un optimum permettant de générer un gain moteur par remplissage égal ou supérieur à la puissance consommée par le compresseur de climatisation. Le principe du pilotage continu consiste à adapter la cylindrée du compresseur, s'il est mécanique, ou sa vitesse de rotation, s'il est électrique, pour, au minimum, équilibrer le bilan.

Lorsqu'il y a équilibre entre le gain par remplissage et la consommation du compresseur, le vilebrequin délivre la même puissance mécanique à la boite de vitesse que si la climatisation était éteinte, mais présente une température d'admission inférieure: Il y a par conséquent un gain en dépollution NOx ou NOX/particules et en durée de vie du piège à NOx ou Nox-trap.

Lorsque le gain par remplissage est plus élevé que la consommation du compresseur, deux options sont possibles:

- Modifier les paramètres de fonctionnement du moteur pour réduire sa consommation.
- Accumuler et stocker du froid supplémentaire pour l'utiliser, par exemple, lorsque l'équilibre remplissage/compresseur n'est pas possible.

Ce pilotage en régime continu permet d'équilibrer le bilan mécanique entre la consommation supplémentaire due au compresseur et le gain moteur par remplissage.

Lorsque le gain moteur par remplissage est supérieur à la consommation supplémentaire du compresseur, le dispositif selon l'invention peut être mis en oeuvre en régime continu en faisant circuler le liquide de refroidissement du deuxième circuit hydraulique dans le by-pass de l'échangeur thermique de stockage de façon à stocker du froid dans le dit échangeur thermique de stockage. Cet échangeur doit être calorifugé pour diminuer les pertes thermiques avec l'environnement chaud sous capot.

Lorsque le gain moteur par remplissage est supérieur à la consommation supplémentaire du compresseur, le dispositif selon l'invention peut être mis en oeuvre en régime continu en condensant partiellement les gaz recirculés dans le deuxième étage basse température de l'échangeur thermique des gaz d'échappement,c'est-à-dire en condensant de la vapeur d'eau, en séparant la phase liquide des gaz et en stockant ladite phase liquide. Le stockage de cette eau liquide équivaut à une accumulation de frigories.

Le dispositif selon l'invention est mis en oeuvre en régime transitoire du moteur thermique pendant les freinages du véhicule en maximisant la cylindrée ou la vitesse de rotation du compresseur du circuit de climatisation et en faisant circuler le liquide de refroidissement du deuxième circuit hydraulique dans le by-pass de l'échangeur thermique de stockage de façon à accumuler du froid dans le dit l'échangeur thermique de stockage.

Durant cette phase, le compresseur de climatisation entraîné par le vilebrequin via la courroie d'accessoires renvoie un couple résistant (énergie mécanique) permettant de ralentir la vitesse de rotation du vilebrequin donc de freiner. Le principe du pilotage capacitif consiste donc à stocker du froid dans un composant calorifugé par freinage récupératif avec le compresseur de climatisation, puis vider ce stock lors de phases transitoires pour lesquelles le pilotage continu n'est pas suffisant ou lorsque les sollicitations thermiques sont trop importantes.

Le froid accumulé lors du pilotage continu ou d'un freinage récupératif est déstocké quand l'équilibre gain moteur par remplissage/compresseur n'est pas possible ou lors d'un transitoire ascendant impliquant des sollicitations thermiques importantes, donc des émissions de NOx élevées.

Le dispositif selon l'invention peut être mis en oeuvre en régime transitoire du moteur thermique pendant les accélérations du véhicule en fermant le by-pass de l'échangeur thermique de stockage et en faisant circuler le liquide de refroidissement du deuxième circuit hydraulique dans l'échangeur thermique de stockage de façon à expulser le liquide froid du dit échangeur thermique de stockage.

En fonctionnement nominal, le liquide de refroidissement, caloporteur (eau glycolée par exemple), circule dans le by-pass de l'échangeur de stockage pour aller refroidir un ou plusieurs composants en aval, un RAS ou un EGR par exemple, et réguler la température de fluides chauds, alors qu'une certaine masse de liquide caloporteur, non circulante, accumule des frigories dans l'échangeur de stockage.

Lorsque le stock de frigories doit être entièrement ou partiellement vidé, la vanne 3 voies pilotée s'ouvre. Le liquide stocké sous-refroidi est alors poussé par le flux de liquide caloporteur, et traverse l'échangeur thermique. Lorsque le transitoire est terminé, la vanne 3 voies se referme, et le stock se recharge.

Le temps de réponse de ce système est égal au volume de l'échangeur thermique divisé par le débit de fluide caloporteur plus le temps de réponse de la vanne. Ce temps de réponse est beaucoup plus faible que pour un système conventionnel avec les inerties thermiques des organes suivants: radiateur, pompe hydraulique, échangeur. On peut donc qualifier ce phénomène de déstockage thermique instantané.

Dans le cadre de l'invention revendiquée, le cycle énergétique moteur/climatisation fonctionne donc comme un système moteur/batterie dans le cas d'un véhicule hybride électrique. On peut donc qualifier ce fonctionnement par le terme d'hybridation thermique.

L'invention sera mieux comprise de l'homme du métier grâce à la description détaillée ci-dessous de certains modes d'exécution et des figures accompagnantes, dans lesquelles

- la figure 1 est un schéma de principe illustrant le pilotage du dispositif selon l'invention en mode de fonctionnement continu,
- la figure 2 est un schéma de principe illustrant le fonctionnement de l'échangeur thermique de stockage,
- la figure 3 est un schéma de principe illustrant la condensation partielle des gaz et le stockage de froid sous forme d'eau liquide,
- la figure 4 est un schéma de principe illustrant un premier mode d'exécution du circuit hydraulique selon l'invention, en mode refroidissement,
- la figure 5 est un schéma de principe illustrant les modes de fonctionnement de l'échangeur thermique de stockage,
- la figure 6 est un schéma de principe illustrant le circuit hydraulique de la figure 4 en mode montée en température du moteur,
- la figure 7 est un schéma de principe illustrant un deuxième mode d'exécution du circuit hydraulique selon l'invention,
- la figure 8 est un schéma de principe illustrant un troisième mode d'exécution du circuit hydraulique selon l'invention, en mode refroidissement, et
- la figure 9 est un schéma de principe illustrant le circuit hydraulique de la figure huit en mode de montée en température.

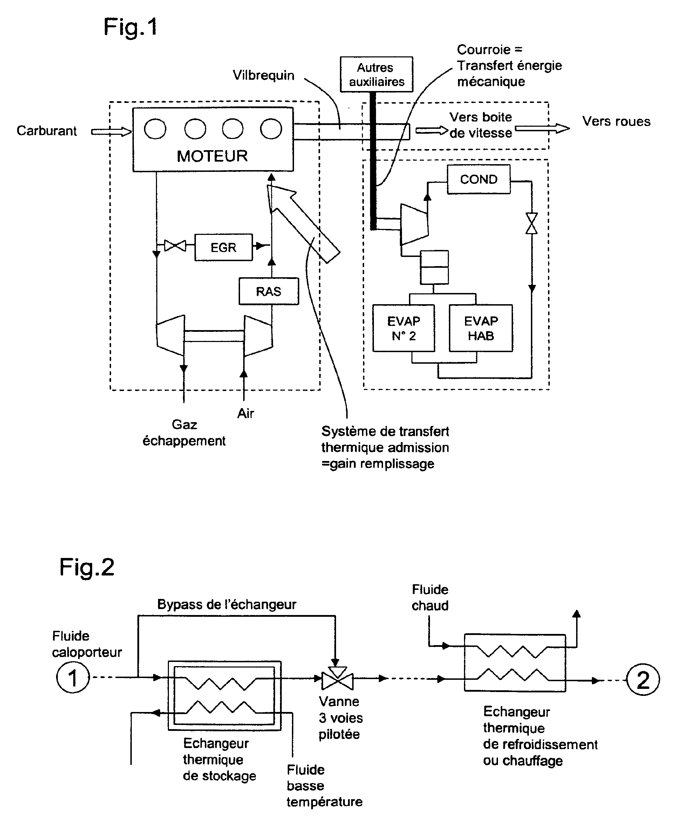

La figure 1 illustre le concept général de base de la présente invention. La partie gauche de la figure 1 montre de façon schématique l'ensemble constitué du moteur et du circuit des gaz d'admission. La partie droite de la figure 1 montre de façon schématique le circuit de climatisation. Comme l'illustre la figure 1, l'invention implique d'une part un transfert d'énergie mécanique entre l'ensemble moteur et le circuit de climatisation et d'autre part un transfert d'énergie thermique entre circuit de climatisation et circuit d'admission.

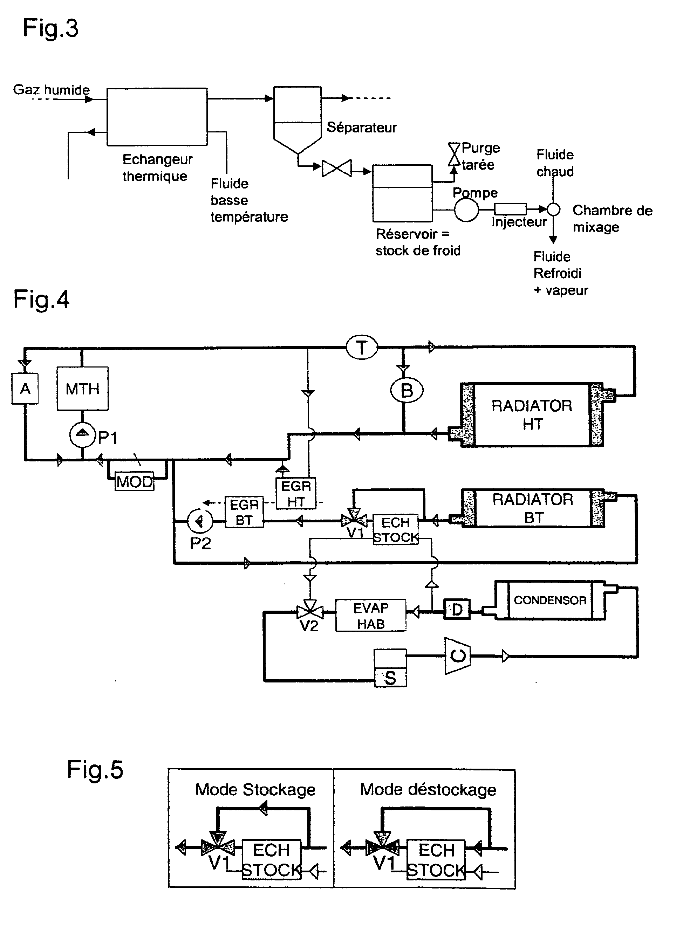

Le système hydraulique de base, illustré dans la figure 4, est constitué de trois circuits de refroidissement:

- un premier circuit haute température et son radiateur HT,
- un deuxième circuit basse température et son radiateur BT,
- un circuit de climatisation et son condenseur (CLIM).

Le montage aéraulique des radiateurs et des condenseurs en face avant du véhicule peut se présenter comme suit:

- Condenseur devant radiateur BT devant radiateur HT.
- Condenseur devant radiateur BT sous radiateur HT.
- Radiateur BT devant condenseur devant radiateur HT
- Radiateur BT sous condenseur devant radiateur HT

Le premier circuit de refroidissement est composé d'organes conventionnels:

- un moteur thermique: MTH,
- un aérotherme : A,
- une pompe à eau mécanique P1 entraînée par le moteur thermique (on peut aussi envisager l'utilisation d'une pompe à eau électrique),
- un bocal de dégazage: B,
- un thermostat principal: T,
- un refroidisseur d'huile moteur MOD

Le deuxième circuit de refroidissement selon l'invention comprend:

- une pompe électrique P2,
- un échangeur EGR de gaz d'échappement recirculés à deux étages(EGR HT et EGR BT) comportant 2 entrées et 2 sorties pour le liquide de refroidissement, avec une entrée et une sortie de gaz d'échappement recirculés,
- un échangeur liquide de refroidissement / fluide frigorigène (ECH STOCK) .
- une vanne 3 voies V1

Le circuit de climatisation est composé des organes conventionnels suivants:

- un compresseur C, soit mécanique à cylindrée fixe (fonctionnement et arrêt en alternance), soit mécanique à cylindrée pilotée, soit hybride, soit électrique; ces compresseurs permettent d'ajuster la production de frigories en fonction de la demande, c'est-à-dire pour le refroidissement de l'habitacle et pour le refroidissement des gaz d'échappement recirculés.
- un condenseur,
- un réservoir / séparateur S .
- un détendeur D commun aux deux branches ou un détendeur dans chaque branche,
- un évaporateur (EVAP HAB).

Le circuit de climatisation, comprend également, selon l'invention:

- une branche en parallèle de l'évaporateur traversant l'échangeur fluide frigorigène / liquide ECH STOCK,
- une vanne à trois voies pilotée V2,

Le liquide de refroidissement du premier et du deuxième circuit de refroidissement est un mélange conventionnel d'eau et d'éthylène glycol avec un ajout d'agents anti-corrosion. Le fluide de la climatisation est un fluide frigorigène conventionnel (R134a, R152a, CO2 ...).

Les évaporateurs de climatisation peuvent être branchés en série (le fluide frigorigène étant diphasique, sa température ne varie pas).

Lorsque le moteur est chaud, le thermostat T est ouvert et la pompe P1 fait circuler le liquide de refroidissement à travers le radiateur HT. Les gaz recirculés (EGR) sont pré refroidis par le liquide de refroidissement du circuit HT ( 500°C -> 90°C) via l'EGR HT. Ils sont ensuite sous-refroidis dans le circuit BT via l'EGR BT. Cette configuration permet un gain en compacité des échangeurs et une utilisation optimale de la valise de refroidissement constituée de l'ensemble radiateur HT et BT.

Le remplissage du stock de froid est illustré dans les figures 4 et 5: La pompe P2 entraîne le liquide de refroidissement à travers le radiateur BT et le by-pass de l'échangeur de stockage ECH STOCK. Les gaz recirculés sont alors refroidis à une température proche de l'air entrant dans le radiateur BT. Durant cette phase, le liquide enfermé dans l'échangeur de stockage est sous-refroidi par la climatisation.

L'énergie nécessaire au compresseur de climatisation C peut être récupérée durant:

- les phases de freinage du véhicule ou de décélération, comme décrit plus en détail ci-dessous.
- les phases de roulage stabilisé par pilotage du couple rendement moteur / COP de climatisation via le calculateur embarqué. En effet, les rendements du moteur et de la climatisation sont directement liés à leur régime et couple respectifs, chacune d'elle passant par un rendement maximal à régime donné. Par une loi d'optimisation, le calculateur pourra définir les couples optimaux des 2 systèmes permettant de minimiser la consommation de carburant.

Dans les deux cas, la vanne pilotée V2 permet de maintenir une puissance de froid constante dans l'évaporateur habitacle (donc de ne pas dégrader la prestation confort) par pilotage du débit de réfrigérant.

Si V1 est une vanne continue, il est alors possible de piloter le débit passant dans l'échangeur ECH STOCK et le débit passant dans le by-pass simultanément en mode « sous refroidissement continu ». Le mélange des 2 débits en sortie permet d'obtenir un sous refroidissement continu du liquide sortant du radiateur BT et de piloter la température des gaz circulés.

Cette fonction peut aussi être réalisée par une vanne tout ou rien. Dans les deux cas cités ci-dessus, la vanne V1 peut être une vanne tout ou rien. Il suffit alors de faire passer l'intégralité du débit dans l'échangeur de stockage. Dans ce cas, le pilotage de la température des gaz circulés sera réalisé par régulation du débit de la pompe P2.

Les échanges thermiques entre le liquide de refroidissement et le fluide de climatisation pendant les phases de pilotage capacitif sur des transitoires sont illustrés sur la figure 2

Lorsqu'un véhicule freine, son énergie cinétique est en partie dissipée au niveau des freins. Sur certains véhicules, une partie de cette énergie est convertie en énergie électrique. Il s'agit de décharger les freins en sollicitant l'alternateur lors des freinages (stop and START, freinage hybride électrique, alternateur piloté, freinage récupératif...).

Le principe de freinage récupératif thermique est de convertir l'énergie cinétique en énergie frigorifique (ou calorifique dans le cas d'une pompe à chaleur) lors des phases de freinage. Lors de ces phases, une partie de l'énergie cinétique normalement dissipée dans les freins est alors utilisée pour faire fonctionner la climatisation à sa capacité maximale. Concrètement, cela se traduira par un pilotage de la cylindrée pour un compresseur mécanique, de l'électronique pour un compresseur électrique. Le pilotage de la cylindrée compresseur permet d'augmenter ou réduire le débit massique de réfrigérant, donc la puissance prélevée dans l'évaporateur.

Les roues du véhicule convertissent alors l'énergie cinétique d'avancement du véhicule en énergie mécanique de rotation du vilebrequin. La courroie de distribution entraînée par ce dernier permet de transférer la puissance vers le compresseur de climatisation. Ce dernier convertit la puissance mécanique de rotation en puissance hydraulique (débit et pression de réfrigérant en phase gazeuse) provoquant un réchauffement du fluide de travail. Ce dernier est refroidi par le condenseur dont la source froide est l'air ambiant, puis détendu à travers un détendeur. Le fluide ainsi obtenu à basse pression et basse température s'évapore à travers un échangeur eau glycolée/réfrigérant, provoquant une baisse de la température de ce dernier. Le système a ainsi converti une énergie cinétique en énergie frigorifique. Durant cette phase, le fluide de la boucle de climatisation refroidit le liquide caloporteur dans l'échangeur thermique de stockage. Le freinage récupératif thermique permet donc de créer un stock d'énergie réutilisable ultérieurement.

Cette méthode permet de plus de réduire la sollicitation des freins et d'en augmenter la durée de vie.

Lors d'une accélération du véhicule, le débit de gaz circulés augmente fortement et rapidement, provoquant une augmentation importante de la puissance thermique à évacuer pour maintenir une température constante. Durant cette phase, la vanne pilotée V1 s'ouvre.

Le débit dans le by-pass devient nul et le liquide froid enfermé dans l'échangeur de stockage est 'poussé' dans l'échangeur EGR BT. La conséquence est une baisse instantanée de la température du liquide de refroidissement à débit constant. Ce pilotage permet de minimiser, voire annuler l'augmentation de température des gaz EGR durant le transitoire. L'impact est un gain sur les émissions de NOx du moteur et donc la durée de vie du piège à NOx ou Noxtrap, et sa consommation de carburant.

Le pilotage de la vanne V1 peut être réalisé en boucle fermée grâce à 2 thermocouples positionnés en sortie de l'échangeur (Th1) de stockage et du radiateur BT (Th2). La fermeture de la vanne intervient alors lorsque les températures de Th1 et Th2 sont les mêmes.

Le pilotage de la vanne V1 peut être réalisé en boucle ouverte grâce à un reconstructeur d'état basé la connaissance du volume interne de l'échangeur, le temps de réponse de la vanne V1, la connaissance du régime (ou la tension) de la pompe P1, sa cartographie débit = f(perte de charge) et la caractéristique hydraulique du circuit BT (ou section équivalente). Le temps de déstockage peut alors être estimé par

$$\text{tps(destock)} = TV1 + (\text{Volume ECH STOCK})/(\text{Débit volumique ECH STOCK})$$

(avec TVI = Temps de réponse de la vanne V1). Le débit volumique est alors calculé par le modèle hydraulique de la boucle BT par résolution de l'équation

$$\Delta Ppompe(qvBT) = \Delta PcircuitBT(qvBT)'$$

dans le cas d'un circuit d'eau basse température séparé du circuit d'eau haute température.

Pour un gain dynamique et économique, le pilotage de la vanne V1 peut être réalisé grâce à un thermocouple couplé au reconstructeur d'état. Pour un gain dynamique, un pilotage en avance de phase peut être réalisé sur la vanne V1. Le calculateur embarqué envoie les informations provenant de la pédale d'accélération ou de frein directement à la vanne. Celle-ci profite du temps de transport des gaz dans le circuit d'alimentation d'air pour anticiper son ouverture et réduire l'effet de son temps de réponse et du temps de réponse hydraulique.

Lorsque le véhicule se trouve dans les conditions de régime spécifiques, le circuit hydraulique décrit ci-dessus s'adapte à des stratégies de pilotage particulières.

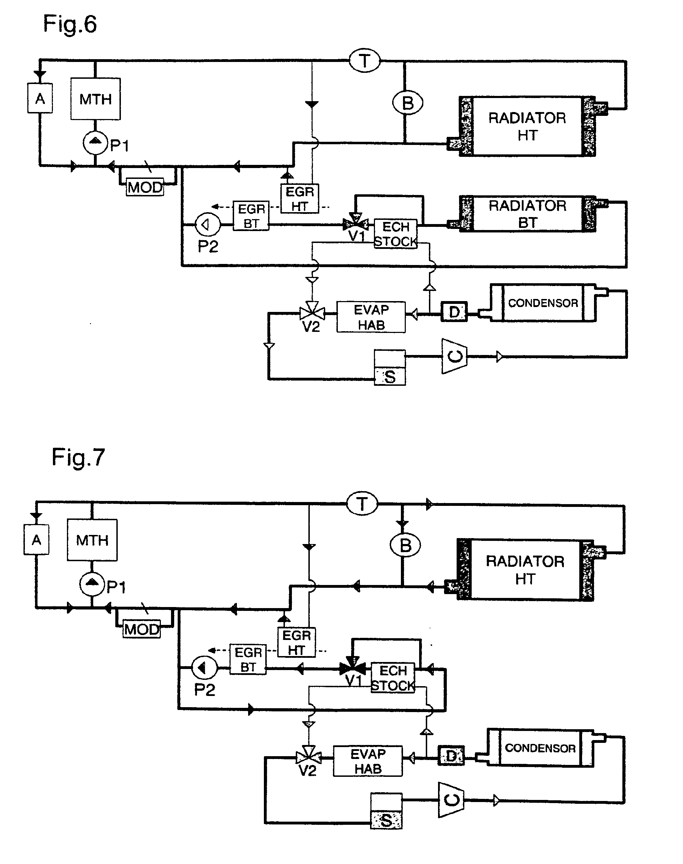

La figure 6 illustre le fonctionnement du circuit hydraulique pendant une phase de montée en température du moteur. Ainsi, lors d'un démarrage à froid, été comme hiver, le thermostat T ferme l'accès au radiateur et au bocal de dégazage. La montée en température du moteur fait alors apparaître deux phases:

- pendant les premières minutes (by-pass EGR), il n'y a pas de recirculation des gaz d'échappement moteur ; les gaz recirculés ne sont pas refroidis pour favoriser la montée en température dans la chambre de combustion. Durant cette phase, la pompe électrique et le sous refroidissement continu ne sont pas activés. Par contre, le freinage récupératif avec la climatisation est activé et commence à accumuler du froid dans l'échangeur de stockage.
- Fin du by-pass EGR: Il y a recirculation des gaz d'échappement moteur. Ces derniers sont refroidis dans l'EGR HT et le pilotage capacitif est toujours activé. L'activation de la pompe électrique dépendra essentiellement de la température de la boucle HT en regard du gain en remplissage.

Durant cette phase et suivant les conditions climatiques, la vanne V2 permet ou non de faire fonctionner l'évaporateur habitacle.

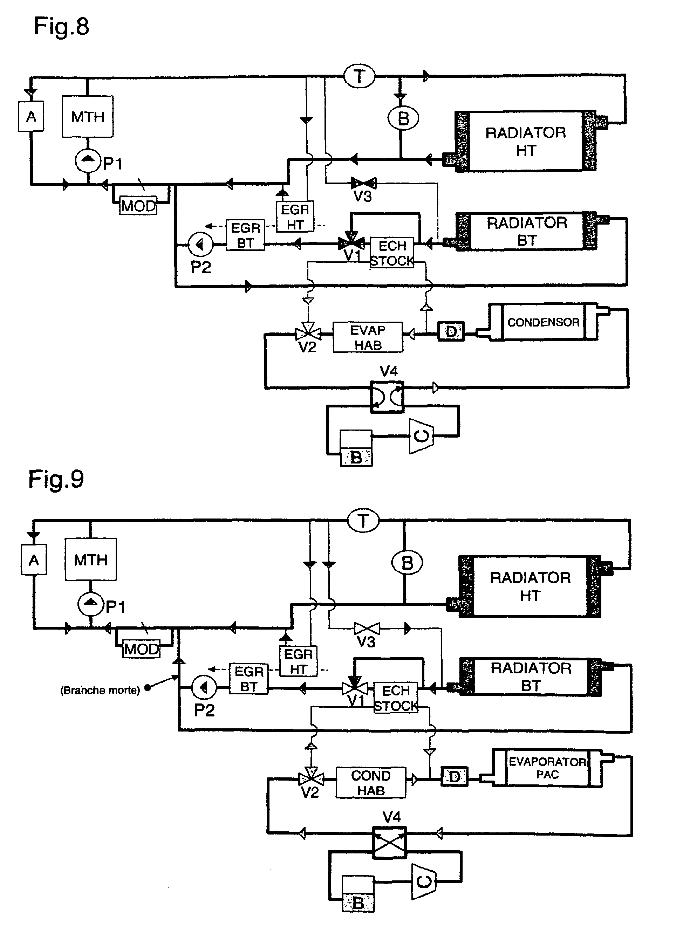

L'ensemble du circuit hydraulique peut également fonctionner pour un stockage de chaleur : le fluide basse température devient alors un fluide haute température (du R134a provenant d'une pompe à chaleur par exemple). Les figures 8 et 9 illustrent le circuit hydraulique selon la mention couplé à une climatisation réversible en pompe à chaleur :

Cette architecture implique l'intégration de 2 vannes pilotées supplémentaires:

- La vanne V3 reliant la sortie du moteur thermique à la sortie du radiateur ST.
- La vanne V4 permettant d'inverser le débit dans la boucle de climatisation. Cette inversion permet de transformer le condenseur de climatisation en évaporateur de la pompe à chaleur et les 2 évaporateurs de climatisation en 2 condenseurs de la pompe à chaleur.

Le fonctionnement de cet ensemble en mode refroidissement et climatisation est illustré par la figure 8 : la vanne V3 est fermée. La vanne V4 est en mode direct. Le fonctionnement du système est le même que celui du circuit hydraulique de base.

Le fonctionnement de cet ensemble en mode montée en température et pompe à chaleur est illustré par la figure 9: La vanne V4 est ouverte. La vanne V4 est en mode inversé. La vanne V1 est en mode déstockage. La branche morte entre les circuits HT et BT, qui ne servait initialement qu'à imposer la pression de référence dans les 2 circuits devient une canalisation à part entière. L'échangeur de stockage reçoit la chaleur générée par le cycle pompe à chaleur. L'eau sortant du moteur traverse l'échangeur de stockage pour être réchauffée puis alimente l'échangeur d'huile, accélérant la montée en température de cette dernière. Cette architecture permet de diminuer la viscosité de l'huile, diminuant les frottements vilebrequin et améliorant le rendement moteur. La pompe P2 peut être arrêtée pour minimiser la consommation électrique. Elle peut être en fonctionnement pour améliorer l'efficacité de l'échangeur de stockage. En climat chaud, cette architecture peut être utilisée exclusivement pour la montée en température moteur avec un rendement de pompe à chaleur très élevé et donc une surconsommation associée très faible.

En climat froid, la pompe à chaleur alimente aussi l'aérotherme et permet de chauffer l'habitacle en complément du condenseur d'habitacle.

Selon un mode d'exécution particulier, dans la valise de refroidissement, l'évaporateur de PAC est situé devant le radiateur ST. Dans ce cas, l'air sortant de l'évaporateur a été refroidi et attaque le radiateur ST rempli d'eau statique. Ce dernier devient alors un stock de froid utilisable dès le début des phases de refroidissement, laissant ainsi un délai lors du passage en mode climatisation pour refroidir l'échangeur de stockage.

Le freinage récupératif par la climatisation peut également être utilisé pour la thermique habitacle.

Selon un mode d'exécution particulier illustré par la figure 7, le circuit hydraulique associé à l'invention peut être réalisé sans radiateur BT :

Le radiateur BT est supprimé. La boucle basse température est intégralement refroidie par la climatisation. Cette solution permet le gain d'un radiateur, soit la possibilité d'augmenter la taille du condenseur et du radiateur HT ou la vitesse de l'air qui les traverse. Cette solution réduit l'inertie thermique de la boucle BT.

Selon un mode d'exécution de la présente convention, illustré par la figure 3, le stockage de froid peut être effectué par accumulation d'eau liquide. Le principe consiste à condenser l'eau contenue dans les gaz d'admission (branche EGR ou collecteur), la stocker dans un réservoir et l'injecter dans un fluide à refroidir.

En fonctionnement nominal, les gaz recirculés sont refroidis en dessous de leur température de saturation (#60°C) par de l'eau glycolée sous-refroidie ou un fluide de tel que le R 134a . Une partie de l'eau contenue dans les gaz se condense et est récupérée à l'aide d'un séparateur de phases. L'eau liquide prélevée est ensuite stockée dans un réservoir. Dans le cadre de la présente invention, les dispositifs de condensation et de récupération peuvent être positionnés:

- En sortie de l'échangeur EGR,
- En entrée du répartiteur d'admission.

Une vanne (électrique ou mécanique) entre le séparateur et le réservoir permet de réguler le niveau d'eau dans le séparateur et d'éviter tout problème de fuite de gaz vers le réservoir. Une vanne de purge tarée permet d'évacuer l'eau liquide du réservoir en cas de sur remplissage. L'injection de l'eau est effectuée en particulier lors de régime transitoires ascendants du moteur: Une pompe pressurise l'eau liquide dont le débit est régulé par un injecteur.

Dans le cas d'une application automobile, l'injecteur peut être positionné:

- Dans le répartiteur d'admission, en sortie RAS et/ou en sortie EGR : Il s'agit alors de piloter la température au collecteur par évaporation de l'eau liquide. En effet, l'eau liquide injectée dans les gaz d'admission prend de l'énergie aux gaz d'admission pour s'évaporer, ce qui entraîne une baisse de la température de ces derniers.
- Directement dans la chambre de combustion, ce qui implique l'intégration d'un injecteur d'eau
- En pré mélange avec le carburant avant l'injecteur.

Il est également possible d'injecter l'eau liquide en amont d'un échangeur pour le décrasser afin qu'il conserve ces performances thermiques.

Les circuits hydrauliques présentés ci-dessus sont tous applicables à la stratégie de stockage thermique sous forme d'eau liquide. Il suffit alors d'ajouter un séparateur en aval de l'échangeur basse température EGR BT pour récupérer le condensat.

De nombreuses variantes du circuit hydraulique peuvent être mises en oeuvre sans sortir du cadre de la présente invention :

Dans la description ci-dessus, l'EGR BT est refroidi à basse ou très basse température. Cet échangeur peut être remplacé par:

- Un RAS basse température
- Un échangeur sur le répartiteur d'admission d'air
- Un RAS basse température en parallèle avec un EGR BT
- Un RAS normal en parallèle avec un EGR BT.

Toutes les vannes 3 voies peuvent être remplacées par 2 vannes mono voie sur chacune des branches hydrauliques.

Dans l'ensemble de la description ci-dessus, le stockage de froid se fait dans l'échangeur fluide frigorigène/eau. Pour des raisons d'intégration dans le véhicule, il est également possible que le stockage se fasse dans un volume supplémentaire placé en sortie de l'échangeur fluide frigorigène/eau, dans un volume placé dans la branche bypass.

**Revendications**

1.  Véhicule automobile comprenant

- un moteur thermique (MHT) comprenant un circuit de gaz d'échappement recirculés, le dit circuit de gaz recirculés comprenant un échangeur thermique pour les dits gaz d'échappement recirculés (EGR HT, EGR BT) comprenant un premier étage haute température et un deuxième étage basse température,
- un premier circuit hydraulique de refroidissement du dit moteur (MHT),
- un circuit de climatisation de l'habitacle du véhicule comprenant, dans une première branche, un évaporateur (EVAP HAB) dans lequel circule un fluide frigorigène,
- un deuxième circuit hydraulique de refroidissement des gaz recirculés (EGR HT, EGR BT), comprenant une pompe (P2) entraînant le liquide de refroidissement du dit deuxième circuit hydraulique,
ledit premier étage haute température étant disposé dans le premier circuit hydraulique de refroidissement et le dit deuxième étage basse température étant disposé dans le deuxième circuit hydraulique de refroidissement,
- un échangeur thermique de stockage (ECH STOCK) permettant un échange thermique entre le liquide de refroidissement du deuxième circuit hydraulique et le fluide frigorigène du circuit de climatisation,
le circuit de climatisation comprend une deuxième branche, en parallèle de la dite première branche de l'évaporateur, permettant au fluide frigorigène de circuler dans l'échangeur thermique de stockage (ECH STOCK), **caractérisé en ce que**
le deuxième circuit hydraulique comprend un dispositif de by-pass (V1) permettant au liquide de refroidissement du deuxième circuit hydraulique de by-passer l'échangeur thermique de stockage (ECH STOCK),

2. Véhicule selon la revendication 1, **caractérisé en ce que** le dispositif de by-pass du deuxième circuit hydraulique de refroidissement comporte une vanne à trois voies (V1).

3. Véhicule selon la revendication 1 ou 2, **caractérisé en ce que** le deuxième circuit hydraulique de refroidissement comporte un radiateur (RADIATOT BT) pour refroidir son liquide de refroidissement.

4. Véhicule selon l'une des revendications précédentes, **caractérisé en ce que** le circuit de climatisation comporte une vanne à trois voies (V2) permettant de faire passer le fluide frigorigène dans la première branche ou dans la deuxième branche.

5. Véhicule selon l'une des revendications précédentes, **caractérisé en ce que** le circuit de gaz d'échappement recirculés comporte en aval de l'échangeur thermique (ECH STOCK) un séparateur de phases, un réservoir de liquide et un dispositif d'injection capable de réinjecter le dit liquide dans le circuit de gaz recirculé.

6. Véhicule selon l'une des revendications précédentes, **caractérisé en ce que** le circuit de climatisation est un circuit réversible en pompe à chaleur et comporte une vanne (V4) permettant d'inverser le débit du fluide, une vanne supplémentaire reliant la sortie du moteur thermique à la sortie du radiateur du deuxième circuit hydraulique.

**Claims**

1. Motor vehicle comprising:

- an internal combustion engine (MHT) comprising an exhaust gas recirculation circuit, said exhaust gas recirculation circuit comprising a heat exchanger for said recirculated exhaust gases (EGR HT, EGR BT), comprising a high-temperature first stage and a low-temperature second stage,
- a first hydraulic circuit for cooling said engine (MHT),
- a climate-control circuit for air-conditioning the cabin of the vehicle comprising, in a first leg, an evaporator (EVAP HAB) through which a refrigerant circulates,
- a second hydraulic circuit for cooling the recirculated gases (EGR HT, EGR BT), comprising a pump (P2) driving the coolant of said second hydraulic circuit,
said high-temperature first stage being located in the first hydraulic cooling circuit and said low-temperature second stage being located in the second hydraulic cooling circuit,
- a storage heat exchanger (ECH STOCK) allowing an exchange of heat between the coolant of the second hydraulic circuit and the refrigerant of the climate-control circuit,
the climate-control circuit comprises a second leg, in parallel with said first leg of the evaporator, allowing the refrigerant to circulate through the storage heat exchanger (ECH STOCK),
**characterized in that**
the second hydraulic circuit comprises a bypass device (V1) allowing the coolant of the second hydraulic circuit to bypass the storage heat exchanger (ECH STOCK).

**2.** Vehicle according to Claim 1, **characterized in that** the bypass device of the second hydraulic cooling circuit comprises a three-way valve (V1).

**3.** Vehicle according to Claim 1 or 2, **characterized in that** the second hydraulic cooling circuit comprises a radiator (RADIATOT BT) for cooling its coolant.

**4.** Vehicle according to one of the preceding claims, **characterized in that** the climate-control circuit comprises a three-way valve (V2) allowing the refrigerant to enter either the first leg or the second leg.

**5.** Vehicle according to one of the preceding claims, **characterized in that** the exhaust gas recirculation circuit comprises, downstream of the heat exchanger (ECH STOCK), a phase separator, a liquid reservoir and an injection device capable of reinjecting said liquid into the EGR circuit.

**6.** Vehicle according to one of the preceding claims, **characterized in that** the climate-control circuit is a reversible heat pump circuit and comprises a valve (V4) for reversing the flow of the fluid, an additional valve connecting the outlet from the combustion engine to the outlet from the radiator of the second hydraulic circuit.

**Patentansprüche**

**1.** Kraftfahrzeug, mit

- einem Verbrennungsmotor (MHT), der eine Leitung für rückgeführte Abgase aufweist, wobei die Leitung für rückgeführte Gase einen Wärmetauscher für die rückgeführten Abgase (EGR HT, EGR BT) enthält, der eine erste Hochtemperaturstufe und eine zweite Niedertemperaturstufe aufweist,
- einem ersten Kühlungshydraulikkreis des Motors (MHT),
- einem Klimatisierungskreis für den Fahrgastraum des Fahrzeugs, der in einem ersten Zweig einen Verdampfer (EVHP HAB) enthält, in dem ein Kältefluid zirkuliert,
- einem zweiten Kühlungshydraulikkreis für rückgeführte Gase (EGR HT, EGR BT), der eine Pumpe (P2) enthält, die die Kühlungsflüssigkeit des zweiten Hydraulikkreises fördert,
wobei die erste Hochtemperaturstufe im ersten Kühlungshydraulikkreis angeordnet ist und die zweite Niedertemperaturstufe im zweiten Kühlungshydraulikkreis angeordnet ist,
- einem Speicher-Wärmetauscher (ECH STOCK), der einen Wärmeaustausch zwischen dem Kühlungsfluid des zweiten Hydraulikkreises und dem Kältefluid des Klimatisierungskreises ermöglicht,
wobei der Klimatisierungskreis einen zweiten Zweig parallel zu dem ersten Zweig des Verdampfers enthält, der dem Kältefluid ermöglicht, im Speicher-Wärmetauscher (ECH STOCK) zu zirkulieren,
**dadurch gekennzeichnet, dass**
der zweite Hydraulikkreis eine Umgehungsvorrichtung (V1) enthält, der der Kühlungsflüssigkeit des zweiten Hydraulikkreises ermöglicht, den Speicher-Wärmetauscher (ECH STOCK) zu umgehen.

**2.** Fahrzeug nach Anspruch 1, **dadurch gekennzeichnet, dass** die Umgehungsvorrichtung des zweiten Kühlungshydraulikkreises ein Dreiwegeventil (V1) enthält.

**3.** Fahrzeug nach Anspruch 1 oder 2, **dadurch gekennzeichnet, dass** der zweite Kühlungshydraulikkreis einen Kühler (RADIATOT BT) enthält, um seine Kühlungsflüssigkeit zu kühlen.

**4.** Fahrzeug nach einem der vorhergehenden Ansprüche, **dadurch gekennzeichnet, dass** der Klimatisierungskreis ein Dreiwegeventil (V2) enthält, das ermöglicht, das Kühlungsfluid in den ersten Zweig oder in den zweiten Zweig zu schicken.

**5.** Fahrzeug nach einem der vorhergehenden Ansprüche, **dadurch gekennzeichnet, dass** der Abgasrückführungskreis stromabseitig des Wärmetauschers (ECH STOCK) einen Phasentrenner, einen Flüssigkeitsvorratsbehälter und eine Einleitungsvorrichtung, die die Flüssigkeit wieder in den Kreis für rückgeführte Gase einleiten kann, enthält.

**6.** Fahrzeug nach einem der vorhergehenden Ansprüche, **dadurch gekennzeichnet, dass** der Klimatisierungskreis ein reversibler Wärmepumpenkreis ist und ein Ventil (V4) enthält, das ermöglicht, den Fluiddurchfluss umzukehren, wobei ein zusätzliches Ventil den Ausgang des Verbrennungsmotors mit dem Ausgang des Kühlers des zweiten Hydraulikkreises verbindet.

## Fig.1

Autres auxiliaires

Courroie = Transfert énergie mécanique

Vilbrequin

Carburant

MOTEUR

Vers boite de vitesse

Vers roues

COND

EGR

RAS

EVAP N° 2

EVAP HAB

Gaz échappement

Air

Système de transfert thermique admission =gain remplissage

## Fig.2

Bypass de l'échangeur

Fluide chaud

Fluide caloporteur

(1)

Echangeur thermique de stockage

Vanne 3 voies pilotée

Fluide basse température

Echangeur thermique de refroidissement ou chauffage

(2)

## Fig.3

Gaz humide

Echangeur
thermique

Fluide
basse
température

Séparateur

Purge
tarée

Réservoir =
stock de froid

Pompe

Injecteur

Fluide
chaud

Chambre de
mixage

Fluide
Refroidi
+ vapeur

## Fig.4

| A | MTH | | T | | | |
| P1 | | | B | | RADIATOR HT | |
| MOD | | | | | | |
| | EGR BT | EGR HT | | V1 | ECH STOCK | RADIATOR BT |
| P2 | | | | | | |
| | | V2 | EVAP HAB | D | CONDENSOR | |
| | | S | C | | | |

## Fig.5

Mode Stockage

V1    ECH STOCK

Mode déstockage

V1    ECH STOCK

## Fig.6

## Fig.7

13

## Fig.8

## Fig.9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2394537 A
- US 20030089319 A
- US 6668764 B
- EP 1059432 A
- EP 1091113 A
- WO 200545224 A
- FR 2890700